(19) Europäisches Patentamt / European Patent Office / Office européen des brevets

(11) **EP 4 031 585 B1**

(12) **EUROPEAN PATENT SPECIFICATION**

(45) Date of publication and mention
of the grant of the patent:
**13.03.2024 Bulletin 2024/11**

(21) Application number: **20786466.1**

(22) Date of filing: **16.09.2020**

(51) International Patent Classification (IPC):
**C08B 31/00** *(2006.01)* **A61K 47/40** *(2006.01)*
**C08B 37/16** *(2006.01)*

(52) Cooperative Patent Classification (CPC):
**C08B 37/0012; C08B 31/006**

(86) International application number:
**PCT/EP2020/075910**

(87) International publication number:
**WO 2021/053039 (25.03.2021 Gazette 2021/12)**

(54) **PROCESS FOR PREPARING A NANOSPONGE**

VERFAHREN ZUR HERSTELLUNG EINES NANOSCHWAMMS

PROCÉDÉ DE PRÉPARATION D'UNE NANOÉPONGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2019 IT 201900016532**

(43) Date of publication of application:
**27.07.2022 Bulletin 2022/30**

(73) Proprietors:
• **Trotta, Francesco**
  **14100 Asti (IT)**
• **Rubin Pedrazzo, Alberto**
  **10040 Druento (TO) (IT)**

(72) Inventors:
• **Trotta, Francesco**
  **14100 Asti (IT)**
• **Rubin Pedrazzo, Alberto**
  **10040 Druento (TO) (IT)**

(74) Representative: **Cattaneo, Elisabetta et al**
**Notarbartolo & Gervasi S.p.A.**
**Viale Achille Papa, 30**
**20149 Milano (IT)**

(56) References cited:
**WO-A1-2012/147069**

• **LÁSZLÓ JICSINSZKY ET AL: "Reaction of oxiranes with cyclodextrins under high-energy ball-milling conditions", BEILSTEIN JOURNAL OF ORGANIC CHEMISTRY, vol. 15, 14 June 2019 (2019-06-14), pages 1448-1459, XP055694010, DOI: 10.3762/bjoc.15.145**
• **FRANCESCO TROTTA ET AL: "Cyclodextrin nanosponges as effective gas carriers", JOURNAL OF INCLUSION PHENOMENA AND MACROCYCLIC CHEMISTRY, KLUWER ACADEMIC PUBLISHERS, DO, vol. 71, no. 1 - 2, 23 February 2011 (2011-02-23), pages 189-194, XP019953686, ISSN: 1573-1111, DOI: 10.1007/S10847-011-9926-5**
• **FERNÁNDEZ MARIANA A ET AL: "Complex systems that incorporate cyclodextrins to get materials for some specific applications", CARBOHYDRATE RESEARCH, vol. 480, 18 May 2019 (2019-05-18), pages 12-34, XP085709845, ISSN: 0008-6215, DOI: 10.1016/J.CARRES.2019.05.006**

**Description**

**FIELD OF THE INVENTION**

The invention relates to a process for preparing a nanosponge through mechanochemistry.

**BACKGROUND**

Nanosponges (NS) are cross-linked cyclodextrin or linear dextrins polymers nanostructured within a three-dimensional network. The reactive hydroxyl of cyclodextrins and linear dextrins allows them to act as polyfunctional monomers, permitting to cross-link with a variety of chemicals (bi or polyfunctional), such as dianhydrides, diisocyanates, diepoxides, dicarboxylic acids etc. The polarity and dimension of the polymer network can be easily tuned by varying the type of crosslinker and degree of cross-linking, influencing final characteristic properties (F. Caldera, M. Tannous, R. Cavalli, M. Zanetti, and F. Trotta, "Evolution of Cyclodextrin Nanosponges," Int. J. Pharm., 2017 ; F. Trotta, "Cyclodextrin Nanosponges and their Applications," Cyclodextrins Pharm. Cosmet. Biomed. Curr. Futur. Ind. Appl., pp. 323-342, 2011).

Since nanosponges are biocompatible and nontoxic are a powerful tool in the wide field of the nano drug delivery (F. Trotta, M. Zanetti, and R. Cavalli, "Cyclodextrin-based nanosponges as drug carriers," Beilstein J. Org. Chem., vol. 8, pp. 2091-2099, 2012; F. Trotta et al., "Molecularly imprinted cyclodextrin nanosponges for the controlled delivery of L-DOPA: perspectives for the treatment of Parkinson's disease," Expert Opin. Drug Deliv., vol. 13, no. 12, pp. 1671-1680, 2016; F. Trotta, C. Dianzani, F. Caldera, B. Mognetti, and R. Cavalli, "The application of nanosponges to cancer drug delivery," pp. 931-941, 2014).

Nanosponges, as a powder, can be used as excipients in in the preparation of tablets, capsules, suspensions and dispersions, or for topical application. Moreover cyclodextrin nanosponges in last years have been employed, with good results, to encapsulate and release a wide spectrum of drugs, showing an improvement in the bioavailability and the release kinetic (S. Swaminathan, R. Cavalli, and F. Trotta, "Cyclodextrin-based nanosponges: a versatile platform for cancer nanotherapeutics development," Wiley Interdiscip. Rev. Nanomedicine Nanobiotechnology, vol. 8, no. 4, pp. 579-601, 2016; R. Cavalli, F. Trotta, and W. Tumiatti, "Cyclodextrin-based nanosponges for drug delivery," J. Incl. Phenom. Macrocycl. Chem., vol. 56, no. 1-2, pp. 209-213, 2006).

The most common nanosponges synthetic pathway consist in dissolving, under continuous stirring, the chosen cyclodextrin or linear dextrin in a suitable solvent and then adding the crosslinker and, if necessary, a catalyst. The solvents are usually organic polar aprotic liquids, for example dimethylformamide (DMF) or dimethylsulfoxide (DMSO).

WO 2012/147069 discloses an alternative synthetic route, via interfacial polymerization: two immiscible solution, one of cyclodextrins dissolved in an alkaline solution and the other one of the crosslinker in a chlorinated solvent, are mixed and stirred. At the interface between the two solution, crosslinking occurs.

**SUMMARY OF INVENTION**

The Applicant has noted that, even if processes for preparing nanosponges are available, it is however still felt the need to provide a new and improved one, overcoming the drawbacks of the prior art.

In particular, the Applicant has noted that the prior art preparation processes of nanosponges involve the presence of organic and often toxic solvents.

The Applicant has also noted that the use of a solvent may affect the whole process, because, especially for biomedical application, the final material has to be accurately cleaned by an extraction procedure with an excess of water or volatile solvents, for removing all the solvent inside the batch (and inside the material structure). The Applicant has in addition noted that this drawback is even more important for a scale up of the reaction, where huge amounts of solvent to dispose of are involved.

Moreover, the Applicant has also noted that organic solvents are expensive and may be hard to recycle, so that their use has a negative impact on the economy of the process itself.

An object of the present invention is therefore the provision of a new and improved process for preparing a nanosponge overcoming the drawbacks of the prior art. Therefore, the present invention relates to a process for preparing a nanosponge comprising the steps of:

a) extruding in a single- or multi-screw extruder at least one dextrin and at least one crosslinker selected from the group consisting of: a dianhydride, a dicarboxylic acid or a derivative thereof, 1,1-carbonyldiimidazole, a carbonate ester, a diisocyanate, a diepoxide, and sodium trimetaphosphate, and
b) obtaining the nanosponge from step a).

The Applicant has indeed unexpectedly found out that by having recourse to mechanochemically induced reactions, it is possible for at least one dextrin and the at least one specific type of crosslinkers to undergo a controlled and repeatable crosslinking reaction between the reactive hydroxyl groups of the at least dextrin with said at least one crosslinker, thus obtaining a three dimensional crosslinked structure; that is, a nanosponges.

In addition, the Applicant has found out that the process according to the invention, by avoiding the use of solvents appears safer and more efficient, reducing costs and the use of energy, compared to the prior art processes for preparing nanosponges.

The Applicant has observed that by having recourse to ballmilling, it is possible to induce said mechanochemical crosslinking reaction through high-energy collisions of the plurality of milling balls with the at least one dextrin and the at least one crosslinker in a particularly controlled and repeatable way, thus obtaining in a simple and economic way a nanosponge.

In the process of the invention in said step a) said at least one dextrin and said at least one crosslinker are subjected to extrusion in a single- or a multi-screw extruder. The Applicant has indeed found out that the use of a single- or a multi-screw extruder for carrying out the mechanochemical reaction between the least one dextrin and the at least one crosslinker is particularly advantageous, in view of the very short reaction time needed, and in view of the fact that the reaction is easily managed even at large scales, thus reducing the overall process costs.

In a preferred embodiment of the process according to the invention, the crosslinker is 1,1-carbonyldiimidazole.

The Applicant has observed that, thanks to the controlled and repeatable reaction carried out through ballmilling using 1,1-carbonyldiimidazole as crosslinker allows fine tuning the final quantity of imidazole reactive moieties, which in turn allows to easily functionalize the nanosponge.

The Applicant has found out that the possibility to easily functionalize the nanosponges thus obtained improves the possibility of using the nanosponges according to the invention in the field of chemical sensors, in the pharmacologic area and image guided therapies, for example for preparing biological markers.

## BRIEF DESCRIPTION OF THE DRAWINGS

Figure 1 shows the comparison of the FTIR spectrum of the nanosponge according to Example 2 with the nanosponge according to Reference Example 1;

Figure 2 shows the comparison of the FTIR spectrum of two nanosponge according to Example 6 with the nanosponge according to Reference Example 2;

Figure 3 shows the comparison of the FTIR spectrum of the nanosponge according to Example 7 with the nanosponge according to Reference Example 3;

Figure 4 shows the comparison of the FTIR spectrum of the nanosponge according to Example 8 with the nanosponge according to Reference Example 4;

Figure 5 shows the comparison of the FTIR spectrum of the nanosponge according to Example 9 with the nanosponge according to Reference Example 5;

Figure 6 shows the comparison of the FTIR spectrum of the nanosponge according to Example 11 with the nanosponge according to Reference Example 6;

Figure 7 shows the comparison of the thermogravimetric analysis of the nanosponge according to Example 11 with the with the nanosponge according to Reference Example 6;

Figure 8 shows the comparison of the thermogravimetric analysis of the nanosponge according to Example 2 with the with the nanosponge according to Reference Example 1;

Figure 9 shows the comparison of the thermogravimetric analysis of three nanosponges according to Examples 1, 2, and 3;

Figure 10 shows a plot with the comparison of the $\zeta$-potential analysis of five nanosponges according to Examples 1, 2, 3, 4, and 5;

Figure 11 shows the comparison of the $\zeta$-potential analysis of the nanosponges according to Examples 5, 12, 13, and 14;

Figure 12 shows, in the upper part, the comparison of the nitrogen content in three nanosponges according to Examples 1, 2, and 3 and, in the lower part, the comparison of the nitrogen content in the nanosponges according to Examples 2, 4, and 5;

Figure 13 shows the comparison of the FTIR spectrum of the nanosponges according to Examples 23 and 24 with the nanosponges according to Reference Examples 7 and 8;

Figure 14 shows the amount of $Cu^{2+}$ ions in water before and after 24h as a percentage of the adsorbed amount by the nanosponges according to Examples 23 and 24, compared with those according to Reference Examples 7 and 8;.

Figure 15 shows the amount of Methylene Blue in water before and after 24h as a percentage of the adsorbed amount by the nanosponges according to Examples 23 and 24, compared with those according to Reference Examples 7 and 8; and

Figure 16 shows the comparison of the thermogravimetric analysis of the nanosponges according to Examples 23 and 24, with those according to Reference Examples 7 and 8.

## DETAILED DESCRIPTION OF THE INVENTION

The present invention relates to a process for preparing a nanosponge comprising the steps of:

a) extruding in a single- or multi-screw extruder at least one dextrin and at least one crosslinker selected from the group consisting of: a dianhydride, a dicarboxylic acid or a derivative thereof, 1,1-carbonyldiimidazole, a carbonate ester, a diisocyanate, a diepoxide, and sodium trimetaphosphate, and

b) obtaining the nanosponge from step a).

The Applicant has indeed unexpectedly found out that by having recourse to mechanochemically induced reactions, it is possible for at least one dextrin and the at least one specific type of crosslinkers to undergo a controlled and repeatable crosslinking reaction between the reactive hydroxyl groups of the at least dextrin with said at least one crosslinker, thus obtaining a three dimensional crosslinked structure; that is, a nanosponges.

In addition, the Applicant has found out that the process according to the invention, by avoiding the use of solvents appears safer and more efficient, reducing costs and the use of energy, compared to the prior art processes for preparing nanosponges.

In the context of the present application, the expression "nanosponge" indicates a cross-linked cyclodextrin or linear dextrin polymer nanostructured within a three-dimensional network.

In the context of the present application, the expression "ballmilling" indicates a technique that uses milling balls in a rotating chamber, called ballmill vessel, to mill materials to achieve high-energy collisions among the substances contained in the same rotating chamber.

Within the framework of the present description and in the subsequent claims, except where otherwise indicated, all the numerical entities expressing amounts, parameters, percentages, and so forth, are to be understood as being preceded in all instances by the term "about".

The present invention may present in one or more of the above aspects one or more of the characteristics disclosed hereinafter.

The process according to the invention comprises the step of mixing at least one dextrin and at least one crosslinker selected from the group consisting of: a dianhydride, a dicarboxylic acid, 1,1-carbonyldiimidazole, a carbonate ester, a diisocyanate, a diepoxide, and sodium trimetaphosphate while milling them mechanochemically in an extruder.

Preferably, in the process according to the invention the at least one dextrin to the at least one crosslinker molar ratio ranges from 0.0625 to 0.75, more preferably from 0.20 to 0.55.

In the process of the invention, in said step a) said at least one dextrin and said at least one crosslinker are subjected to extrusion in a single- or a multi-screw extruder.

In other words, the present invention relates to a process for preparing a nanosponge comprising the steps of:

a) extruding at least one dextrin and at least one crosslinker in a single- or a multi-screw extruder; and

b) obtaining the nanosponge from step a).

The Applicant has indeed found out that the use of a single- or a multi-screw extruder for carrying out the mechanochemical reaction between the least one dextrin and the at least one crosslinker is particularly advantageous, in view of the very short reaction time needed, and in view of the fact that the reaction is easily managed even at large scales, thus reducing the overall process costs.

Furthermore, in an extruder, the progress of the reaction can be easily kept under control thanks to force sensors that control the shear applied by screw. When the crosslinking occurs, indeed, there is an immediate raise of the applied stress. This advantageously allows a particularly easy and reliable control of the process.

At the end of the extrusion step, furthermore, the nanosponge may be easily obtained and thus collected directly from the outlet of the extruder, thus further reducing processing time and costs of the process.

In the invention, any single- or multi-screw extruder commonly used for processing of polymers may be used, without requiring any particular structural or functional adaptation. This contributes in rendering the process according to this embodiment of the invention particularly advantageous in view of the reduced costs of adaptation of a standard process machinery widely used as an extruder.

Preferably, in said preferred embodiment said extruder is a twin-screw extruder. Twin-screw extruders are indeed particularly advantageous as they allow establishing in a very short time high-energy interactions between the at least one dextrin and the at least one crosslinker, thus rendering the crosslinking reaction very fast.

Preferably, said extruder comprises a recycle chamber, allowing to recycle the extrudate to the feeding inlet.

Preferably, said extruder comprises at least one force sensor, apt to control the shear applied to the reaction mixture of at least one dextrin and at least one crosslinker.

Preferably, in said preferred embodiment the extrusion is carried out at a temperature ranging from 120 °C to 180 °C, more preferably at a temperature ranging from 130 °C to 170 °C, even more preferably at a temperature ranging from 140 °C to 160 °C, optimally at about 150 °C.

Preferably, in said preferred embodiment the extrusion is carried out for a time ranging from 5 minutes to 25 minutes, more preferably for a time ranging from 10 minutes to 20 minutes, optimally for about 15 minutes.

Preferably, in the process according to the invention the at least one dextrin is a cyclodextrin.

Preferably, said cyclodextrin is selected from the group consisting of: $\alpha$-cyclodextrin, $\beta$-cyclodextrin, $\gamma$-cyclodextrin, or a derivative thereof.

Preferably, said derivative of said cyclodextrin is selected from the group consisting of: hydroxypropyl-$\beta$-cyclodextrin (HP-$\beta$-CD) and sulfobutyl ether-0-cyclodextrin (SBE-$\beta$-CD).

In a preferred embodiment of the invention, the at least one cyclodextrin is $\beta$-cyclodextrin.

In the process according to the invention the at least one crosslinker is selected from the group consisting of: a dianhydride, a dicarboxylic acid, 1,1-carbonyldiimidazole, a carbonate ester, a diisocyanate, a diepoxide, and sodium trimetaphosphate.

Among the dianhydrides, in the present invention the following dianhydrides can be used: diethylenetriaminepentaacetic dianhydride, ethylenediaminetetraacetic dianhydride, benzophenone-3,3',4,4'-tetracarboxylic dianhydride, and pyromellitic dianhydride. More preferably the at least one crosslinker is pyromellitic dianhydride.

Among the dicarboxylic acids, in the present invention the following diacids can be used: polyacrylic acid, butane tetracarboxylic acid, succinic acid, tartaric acid and citric acid. More preferably the at least one crosslinker is citric acid. In an advantageous embodiment the nanosponge comprises citric acid and tartaric acid as crosslinkers.

Among derivatives of dicarboxylic acids, in the present invention diacyl halides and diesters can be preferably used: terephthaloyl halides, preferably terephthaloyl chloride, and dialkyl phthalates, preferably dimethyl phthalate.

Among the diisocyanates, in the present invention the following diisocyanates can be used: toluenediisocyanate, isophorone diisocyanate, 1,4-phenylene diisocyanate, poly(hexamethylene diisocyanate), and hexamethylene diisocyanate. More preferably the at least one crosslinker is hexamethylene diisocyanate or toluene-2,4-diisocyanate.

Preferably, among the carbonate esters, in the process according to the present invention diphenylcarbonate may be used as crosslinker.

Preferably, among the diepoxide, in the process according to the present invention bisphenol A diglycidyl ether may be used as crosslinker.

In a preferred embodiment of the process according to the invention, the crosslinker is 1,1-carbonyldiimidazole.

The Applicant has indeed found out that, thanks to the controlled and repeatable reaction carried out through mechanochemical reaction when using 1,1-carbonyldiimidazole as crosslinker, allows fine tuning the final quantity of imidazole reactive moieties, which in turn allows to easily functionalize the nanosponge.

The Applicant has found out that the possibility to easily functionalize the nanosponges thus obtained improves the possibility of using the nanosponges according to the invention in the field of chemical sensors, in the pharmacologic area and image guided therapies, for example for preparing biological markers.

The process according to the invention therefore preferably gives the opportunity of an easy functionalization of nanosponges. Preferably, the process according to the present invention further comprises the step of: functionalizing the nanosponge of step b) with a functionalizing agent selected from the group consisting of: a dye and a fluorophore.

The process according to the present invention is also extremely flexible and allows obtaining, in an easy and repeatable way, also cationic nanosponges, in particular cationic nanosponges carrying out at least one ammonium group.

Preferably, the process according to the present invention further comprises the step of: adding in step a) at least one compound comprising at least one ammonium group.

Preferably, the at least one compound comprising at least one ammonium group is choline chloride.

Further features and advantages of the invention will appear more clearly from the following description of some preferred embodiments thereof, made hereinafter by way of a non-limiting example with reference to the following exemplary examples.

**EXPERIMENTAL PART**

Materials and Methods

$\alpha$-cyclodextrin ($\alpha$-CD), $\beta$-cyclodextrins ($\beta$-CD) and $\gamma$-cyclodextrins ($\gamma$-CD), linear Maltodextrins (GLUCIDEX®2 and KLEPTOSE® Linecaps Maltodextrin from Roquette) were kindly provided by Roquette Italia SpA (Cassano Spinola, Italy). Dextrins were dried before use, in oven at 100°C until constant weight.

1,1-Carbonyldiimidazole (CDI), Diphenylcarbonate (DPC), Hexamethylene diisocianate (HMDI), Toluene-2,4-diisocyanate (TDI), Sodium trimetaphosphate (STMP), Bisphenol A diglycidyl ether (BADGE), 1,4-Diazabicyclo [2.2.2] octane (DABCO), Methyl Red, Rodamine B, Fluorescein, dimethylformamide (DMF), Choline Chloride, acetone and ethanol were purchased from Sigma Aldrich (Munich, Germany) and used with no further purification.

Ball Mill: Retsch PM200 High Speed Planetary Ball Mill, 20 sintered zirconium oxide balls of 10 mm diameter; 16 mL (volume) of sintered zirconium oxide balls of 3 mm diameter; 2 jars of 50 mL (with 10 balls or 16 mL, for having the same weight, 60g, in each jar), also in zirconium oxide.

Extruder: twin-screw extruder used Haake MiniLab II microcompounder with screw configuration (benchtop scale instrument).

Elemental Analysis: performed on a Thermo Scientific FlashEA 1112, using Vanadium Pentoxide purchased from Sigma. For the analysis, samples are usually prepared using an amount of powder between 2,20 and 2,80 mg. The furnace of the instrument is set at 900°C, the inert gas is Helium. Three repetitions are made for each sample and the value reported is the arithmetic average of the three values determined.

Thermogravimetric Analysis: carried out on a Hi-Res TGA 2050 Thermogravimetric Analyzer from TA Instruments. For the analysis, the samples are heated at a 10°C/minute rate, from 25°C to 700°C. All measurement conducted in nitrogen atmosphere.

FTIR: FTIR spectra on dried powders were recorded in ATR mode between 650-4000 cm-1 on a PerkinElmer Spectrum 100 FT-IR Spectrometer with 16 scans.

$\zeta$-potential and Dynamic Light Scattering (DLS): measures were performed on Zetasizer Nano ZS from Malvern Panalytical. For the analysis, the samples in dispersion form are prepared in distilled water (the amount of sample is around 100 mg dispersed in 10 mL for all measurement) in polystyrene cuvettes from Malvern Panalytical.

Pressurized Solvent Extraction (PSE): solvent extraction for purifying samples was carried out with a Pressurized Solvent Extractor (PSE) Speed Extractor E-914 from Buchi. Extractions are carried out with acetone, at 80°C and 120 Bar. Two cycle of extraction, of 10 min, with 80 mL of acetone each.

Solubility test: a sample of the nanosponge was immersed in the tested solvent at 25 °C and at concentration of 0.005 g/ml. The solubility of the nanosponge was determined after 24 hours, at 25°C. The nanosponge was considered soluble when at least 50% by weight of the same was found to be dissolved at the time of the observation.

Adsorption of $Cu^{2+}$ ions test: a $Cu^{2+}$ 500 ppm solution was prepared by dissolving the proper amount of $CuSO_4$, in ultrapure water. Metal adsorption tests were performed by stirring 30 mg of nanosponge in 10 mL of the thus obtained metal solution. At the initial time and after 24h , the dispersions were centrifuged (for 10 min at 4000 rpm) and the supernatant filtered using a 0.2 $\mu$m PTFE syringe filters and analysed by UV-Vis (at 830 nm,) using a Perking Elmer UV/Vis Spectrometer Lambda 25 for quantifying the residual uncomplexed metal. Adsorption was carried out at 25 °C and under continuous stirring. An external calibration curve for the quantification was used.

Adsorption of Methylene Blue test: a $10^{-5}$ M Methylene Blue solution was prepared by dissolving the proper amount of organic dye, in ultrapure water. Adsorption tests were performed by stirring 10 mg of the nanosponge in 10 mL of the methylene blue solution thus obtained. At the initial time and after 24h, the dispersions were centrifuged (4000 rpm, 10 min), the supernatant was filtered using 0.2 $\mu$m PTFE syringe filters and then analysed by UV-Vis using a Perking Elmer UV/Vis Spectrometer Lambda 25, using an external calibration curve for the quantification.

Swelling test: for measuring the swelling capacity of the nanosponges two different methods were used, for better comparing results:

- dropwise method: 500 mg of dry nanosponge were introduced in a 7 mL vial placed on a balance and water added dropwise to form a rigid hydrogel. When the amount of water exceeded the maximum volume that the nanosponge could absorb, the hydrogel started flowing as the vial was tilted. The mass of water that allowed to turn a rigid hydrogel into a flowing one was recorded and used to calculate the swelling ratio, i.e. the percentage of nanosponge water uptake, according to following equation (1):

$$Swelling\ Ratio\ \% = \frac{amount\ of\ absorbed\ water\ (mg)}{amount\ of\ dry\ polymer\ (mg)} * 100 \qquad (1)$$

- centrifuge method: the dry nanosponge powder (0.5 g) was immersed in deionized water (filled the test tube up to 10 mL), was mixed in the beginning using a Vortex Mixer and was left for 2 hours at room temperature. After this time the mixture was centrifuged to obtain the layers of water-bound material and free unabsorbed water. The free water was removed using tissue paper and the weight of the gel was checked. After reading the mass, the gel was left for 2 more hours in order to check the differences.

**Reference Example 1 (solvent based synthesis of a nanosponge based on β-cyclodextrin/CDI with dextrin/crosslinker molar ratio of 0.25)**

7.87 grams of β-cyclodextrin (desiccated in oven at 120°C for at least 2-3 days) were dissolved in 47.0 mL of anhydrous dimethylformamide (DMF) under vigorous stirring, then 4.49 grams of CDI are added. Then, after complete solubilization of reactants, the solution was heated, under reflux, to 80-90°C. After 30 minutes the gelation process occured.
The already formed nanosponge was then milled and cleaned with an excess of deionized water in order to remove the DMF and unreacted monomers and imidazole. A further purification was performed by Soxhlet extraction with ethanol and/or acetone (at least a week of Soxhlet).

**Reference Example 2 (solvent based synthesis of a nanosponge based on β-cyclodextrin/DPC with dextrin/crosslinker molar ratio of 0.25)**

6.00 grams of β-cyclodextrin (desiccated in oven at 120°C for at least 2-3 days) were dissolved in 47.0 mL of anhydrous dimethylformamide (DMF) under vigorous stirring, then 5.10 grams of DPC were added. Then, after complete solubilization of reactants, the solution was sonicated for 3-4h and heated at 80°C. The crosslinked polymer precipitated as a white powder. The nanosponge was cleaned with an excess of deionized water in order to remove the DMF and unreacted monomers and residual phenol. A further purification was performed by Soxhlet extraction with ethanol and/or acetone (at least a week of Soxhlet).

**Reference Example 3 (solvent based synthesis of a nanosponge based on β-cyclodextrin/HDMI with dextrin/crosslinker molar ratio of 0.25)**

3.75 grams of β-cyclodextrin (desiccated in oven at 120°C for at least 2-3 days) were dissolved in 13 mL of DMSO under vigorous stirring. After complete solubilization of the dextrins 1.85 grams of HMDI were added. The gelation process occured immediately.
The already formed nanosponge was then milled and cleaned with an excess of deionized water, ethanol and/or acetone.

**Reference Example 4 (solvent based synthesis of a nanosponge based on β-cyclodextrin/TDI with dextrin/crosslinker molar ratio of 0.25)**

3.75 grams of β-cyclodextrin (desiccated in oven at 120°C for at least 2-3 days) were dissolved in 13 mL of DMSO under vigorous stirring. After complete solubilization of the dextrins 2.00 grams of TDI were added. The gelation process occured immediately.
The already formed nanosponge was then milled and cleaned with an excess of deionized water, ethanol and/or acetone.

**Reference Example 5 (solvent based synthesis of a nanosponge based on β-cyclodextrin/BADGE with dextrin/crosslinker molar ratio of 0.25)**

4.0 grams of β-cyclodextrin (desiccated in oven at 120°C for at least 2-3 days) were dissolved in 30 mL of DMSO under vigorous stirring. After complete solubilization of the dextrins 4.20 grams of BADGE were added. The gelation process occured immediately.
The already formed nanosponge was then milled and cleaned with an excess of deionized water, ethanol and/or acetone.

**Reference Example 6 (solvent based synthesis of a nanosponge based on Glucydex/STMP with dextrin/crosslinker molar ratio of 0.25)**

4.0 grams of GLUCIDEX®2 (desiccated in oven at 120°C for at least 2-3 days) were dissolved in 9.5 mL of water 1.5 M (NaOH) under vigorous stirring, then 4.04 grams of STMP were added. Then, after complete solubilization of reactants, after 15 minutes the gelation process occured.
The already formed nanosponge was then milled and cleaned with an excess of deionized water, ethanol and/or acetone.

**Reference Example 7 (solvent based synthesis of a nanosponge based on β-cyclodextrin/citric acid with dextrin/crosslinker molar ratio of 0.25)**

20.00 g of β-cyclodextrin, 3.73 g of sodium hypophosphite monohydrate and 13.51 grams of citric acid were dissolved in 100 mL of deionized water. Then, after complete solubilization of all reactants, the solution was poured in a 20 cm-diameter crystallizing dish and heated in oven (Memmert VO500) for 1 h at 140 °C and 4 h at 100 °C, under low pressure (~ 20 mbar, oven equipped with a KNF membrane pump). After 4h, a rigid sponge-like bulk was obtained. The obtained bulk was crushed, then it was stirred in water.

Then the suspension was then left to settle, the supernatant was removed and replaced with fresh deionized water. This cycle was repeated five-six times, until a clear and colourless supernatant was observed. The nanosponge was then filtered in a Buchner funnel, using an excess of water and acetone and dried at 25 °C. The already formed nanosponged was then ball milled for 30 min at 350 rpm, obtaining a particle size around 800 nm.

**Reference Example 8 (solvent based synthesis of a nanosponge based on β-cyclodextrin/citric acid with dextrin/crosslinker molar ratio of 0.125)**

Reference Example 7 was repeated, but using 27.09 grams of citric acid instead of 13.51 grams.

**Example 1 not according to the invention (nanosponge based on α-cyclodextrin/CDI with dextrin/crosslinker molar ratio of 0.25)**

In the 50 milliliters ball mill jar containing 10 zirconia balls (10 millimeters of diameter), 3.38 grams of α-cyclodextrin and 2.25 grams of CDI were inserted, to get a dextrin/crosslinker molar ratio of 0.25.

After 3 hours of sun wheel rotation at 600 rotations per minute (rpm), with clockwise to anticlockwise change of direction every 15 min, the reaction was completed and the external temperature was between 50-60°C. The finely ground powder thus obtained (5.60 grams) as then dispersed in water and washed several times with deionized water and acetone. After the washing, all samples were extracted with Pressurized Solvent Extraction (PSE), with acetone, for removing the residual imidazole in the nanosponge structure.

**Example 2 not according to the invention (nanosponge based on β-cyclodextrin/CDI with dextrin/crosslinker molar ratio of 0.25)**

Example 1 was repeated, but using 3.75 grams of β-cyclodextrin instead of 3.38 grams of α-cyclodextrin, to get a dextrin/crosslinker molar ratio of 0.25, obtaining 4.08 grams of finely ground powder of a β-cyclodextrin/CDI nanosponges.

**Example 3 not according to the invention (nanosponge based on γ-cyclodextrin/CDI with dextrin/crosslinker molar ratio of 0.25)**

Example 1 was repeated, but using 4.56 grams of γ-cyclodextrin instead of 3.38 grams of α-cyclodextrin, to get a dextrin/crosslinker molar ratio of 0.25, obtaining 3.90 grams of finely ground powder of a γ-cyclodextrin/CDI nanosponges.

**Example 4 not according to the invention (nanosponge based on β-cyclodextrin/CDI with dextrin/crosslinker molar ratio of 0.50)**

Example 1 was repeated, but using 7.5 grams of β-cyclodextrin instead of 3.38 grams of α-cyclodextrin, to get a dextrin/crosslinker molar ratio of 0.50, obtaining 4.48 grams of finely ground powder of a β-cyclodextrin/CDI nanosponges.

**Example 5 not according to the invention (nanosponge based on β-cyclodextrin/CDI with dextrin/crosslinker molar ratio of 0.125)**

Example 1 was repeated, but using 1.875 grams of β-cyclodextrin instead of 3.38 grams of α-cyclodextrin, to get a dextrin/crosslinker molar ratio of 0.125, obtaining 2.19 grams of finely ground powder of a β-cyclodextrin/CDI nanosponges.

**Example 6 not according to the invention (nanosponge based on [3-cyclodextrin/DPC with dextrin/crosslinker molar ratio of 0.25)**

In the 50 milliliters ball mill jar containing 16 milliliters (60 grams) of zirconia balls (3 millimeters of diameter), 3.00 grams of β-cyclodextrin and 2.26 grams of DPC were inserted, to get a dextrin/crosslinker molar ratio of 0.25.
After 4 hours of sun wheel rotation at 600 rotations per minute (rpm), with clockwise to anticlockwise change of direction every 10 min, the reaction was completed. The finely ground powder thus obtained was then dispersed in water and washed several times with deionized water and acetone, and dried at air, thus obtaining 3.00 grams of nanosponge.

**Example 7 not according to the invention (nanosponge based on β-cyclodextrin/HDMI with dextrin/crosslinker molar ratio of 0.25)**

In the 50 milliliters ball mill jar containing 16 milliliters (60 grams) of zirconia balls (3 millimeters of diameter), 300 milligrams of DABCO, 3.75 grams of β-cyclodextrin and 1.85 grams of HDMI were inserted, to get a dextrin/crosslinker molar ratio of 0.25. After 1 hour of sun wheel rotation at 600 rotations per minute (rpm), with clockwise to anticlockwise change of direction every 10 min, the reaction was completed. The finely ground powder thus obtained was then dispersed in water and washed several times with deionized water and acetone, and dried at air, thus obtaining 3.36 grams of nanosponge.

**Example 8 not according to the invention (nanosponge based on β-cyclodextrin/TDI with dextrin/crosslinker molar ratio of 0.25)**

Example 7 was repeated, but using 2.00 grams of TDI instead of 1.85 grams of HDMI, to get a dextrin/crosslinker molar ratio of 0.25, obtaining 2.88 grams of finely ground powder of a β-cyclodextrin/TDI nanosponges.

**Example 9 not according to the invention (nanosponge based on β-cyclodextrin/BADGE with dextrin/crosslinker molar ratio of 0.25)**

In the 50 milliliters ball mill jar containing 16 milliliters (60 grams) of zirconia balls (3 millimeters of diameter), 300 milligrams of DABCO, 3.75 grams of β-cyclodextrin and 4.50 grams of BADGE were inserted, to get a dextrin/crosslinker molar ratio of 0.25.
After 1 hour of sun wheel rotation at 600 rotations per minute (rpm), with clockwise to anticlockwise change of direction every 10 min, the obtained bulk was ground in mortar and the powder was ball milled again for 30 min with water. The dispersion was centrifuged and washed several times with deionized water and acetone, and, dried at air, thus obtaining 4.53 grams of nanosponge.

**Example 10 not according to the invention (nanosponge based on linecaps/STMP with dextrin/crosslinker molar ratio of 0.25)**

In the 50 milliliters ball mill jar containing 16 milliliters (60 grams) of zirconia balls (3 millimeters of diameter), 1.25 grams of NaOH, 3.75 grams of KLEPTOSE® Linecaps Maltodextrin and 4.04 grams of sodium trimetaphosphate were inserted, to get a dextrin/crosslinker molar ratio of 0.25.
After 30 hour of sun wheel rotation at 400 rotations per minute (rpm), with clockwise to anticlockwise change of direction every 10 min, a powder was obtained. For easily removing the powder from the jars the powder was ball milled again for 10 min with water. The formed gels were centrifuged and washed several times with deionized water and acetone, for removing residual NaOH and freeze dried, thus obtaining 3.5 grams of nanosponge.

**Example 11, not according to the invention (nanosponge based on Glucydex/STMP with dextrin/crosslinker molar ratio of 0.25)**

Example 10 was repeated, but using 3.75 grams of GLUCIDEX®2 maltodextrin instead of 3.75 grams of KLEPTOSE® Linecaps Maltodextrin, to get a dextrin/crosslinker molar ratio of 0.25, obtaining 4.05 grams of finely ground powder of a Glucydex/STMP nanosponge.

**Example 12 (functionalization with Methyl Red)**

500 milligrams of a nanosponges prepared according to Example 5 were dispersed in a 10 milliliter flask containing 7 milliliters of anhydrous DMSO. 50 milligrams of Methyl Red were added to the dispersion and then the dispersion was heated for 4 hours at 85 °C in an oil bath. The product thus obtained was washed with an excess of water and then extracted with acetone using PSE for removing unreacted dyes.

The nanosponge thus obtained was then subjected to Z-potential analysis.

**Example 13 (functionalization with Rhodamine B)**

Example 12 was repeated, but using 50 milligrams of Rhodamine B instead of 50 milligrams of Methyl Red.

**Example 14 (functionalization with Fluorescein)**

Example 12 was repeated, but using 50 milligrams of Fluorescein instead of 50 milligrams of Methyl Red.

**Example 15 - Solubility test**

The nanosponges according to Examples 1-11 were subjected to a solubility test with water, ethanol, acetone, dimethylformamide, dimethylsulfoxide, diethyl ether, petroleum ether, as disclosed above in the section "Materials and Methods".

Table 1 shows the solubility in water, ethanol, acetone, dimethylformamide, dimethylsulfoxide, diethyl ether, petroleum ether of the tested nanosponges.

In Table 1, "YES" and "NO" respectively means that the polymer was, or was not, soluble according to this definition given above.

## TABLE 1

| Example | Solvent | | | | | | |
|---|---|---|---|---|---|---|---|
| | water | ethanol | acetone | dimethyl formamide | dimethyl sulfoxide | diethyl ether | petroleum ether |
| 1 | NO | NO | NO | NO | NO | NO | NO |
| 2 | NO | NO | NO | NO | NO | NO | NO |
| 3 | NO | NO | NO | NO | NO | NO | NO |
| 4 | NO | NO | NO | NO | NO | NO | NO |
| 5 | NO | NO | NO | NO | NO | NO | NO |
| 6 | NO | NO | NO | NO | NO | NO | NO |
| 7 | NO | NO | NO | NO | NO | NO | NO |
| 8 | NO | NO | NO | NO | NO | NO | NO |
| 9 | NO | NO | NO | NO | NO | NO | NO |
| 10 | NO | NO | NO | NO | NO | NO | NO |
| 11 | NO | NO | NO | NO | NO | NO | NO |

All the nanosponges tested were insoluble in the tested solvents, in accordance with the formation of a crosslinked network.

## Example 16 - FT-IR analysis

Nanosponges according to Examples 2, 6, 7, 8, 9, and 11 were characterized in terms of their FTIR spectrum and compared with the corresponding nanosponges according to reference examples 1-6.
The FTIR spectra were recorded as disclosed above in the section "Materials and Methods".

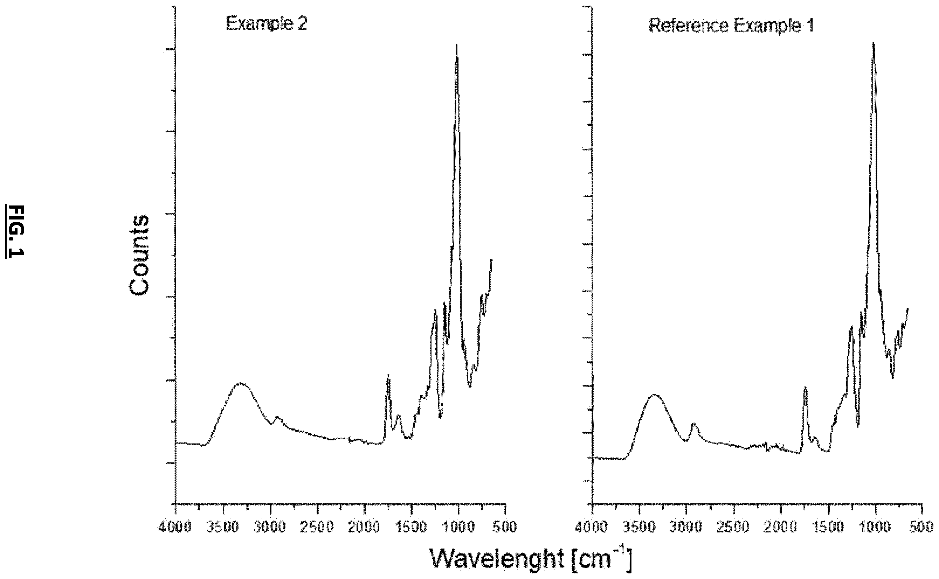

Figure 1 shows the comparison of the FTIR spectra of the nanosponge according to Example 2 (left) with the nanosponges according to Reference Example 1 (right), obtained from the same dextrin (β-cyclodextrin), with the same crosslinker (CDI) and with the same dextrin/crosslinker molar ratio (0.25).

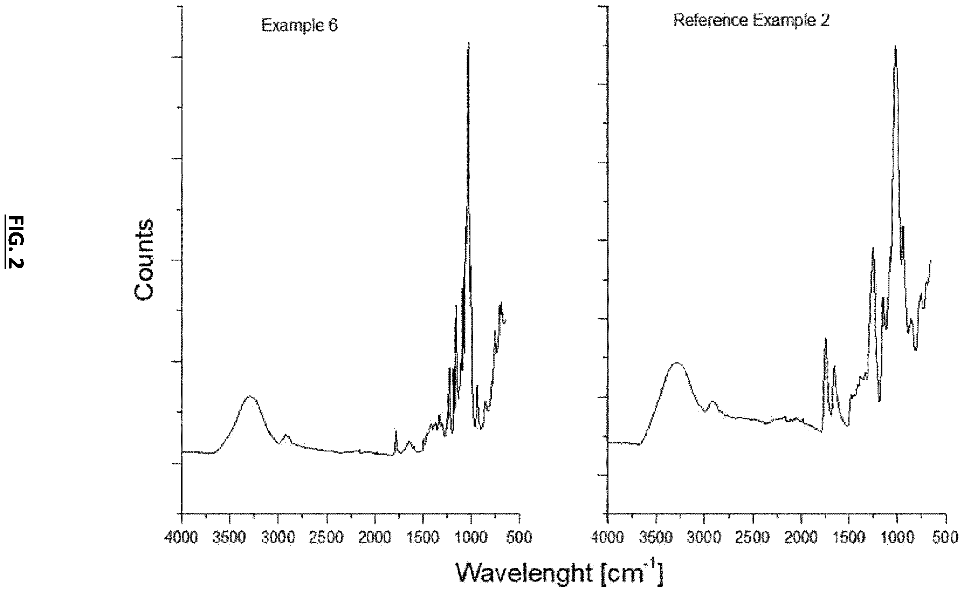

Figure 2 shows the comparison of the FTIR spectra of the nanosponge according to Example 6 (left) with the nanosponges according to Reference Example 2 (right), obtained from the same dextrin (β-cyclodextrin), with the same crosslinker (DPC) and with the same dextrin/crosslinker molar ratio (0.25).

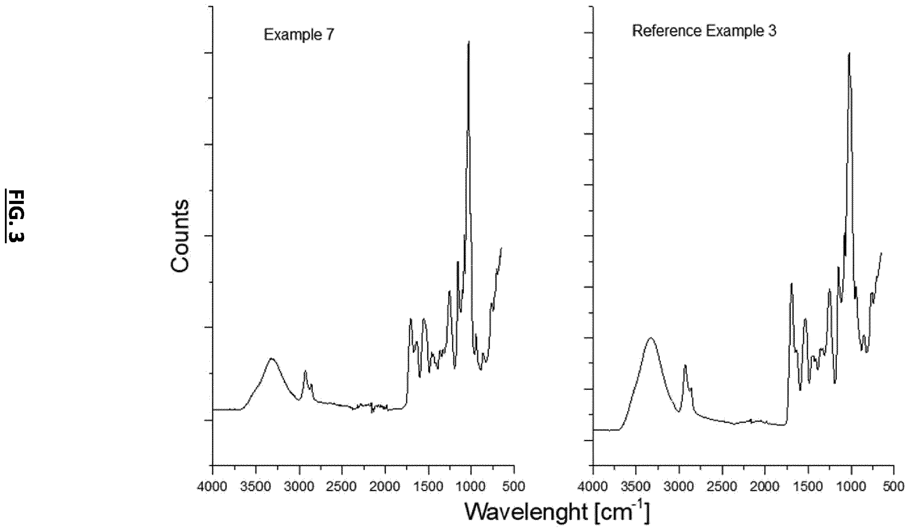

Figure 3 shows the comparison of the FTIR spectra of the nanosponge according to Example 3 (left) with the nanosponges according to Reference Example 3 (right), obtained from the same dextrin (β-cyclodextrin), with the same crosslinker (HDMI) and with the same dextrin/crosslinker molar ratio (0.25).

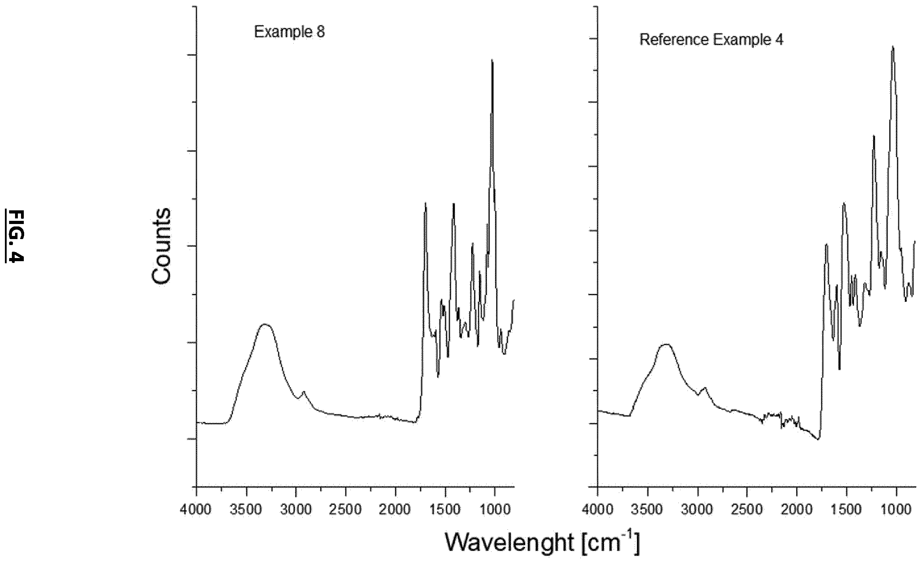

Figure 4 shows the comparison of the FTIR spectra of the nanosponge according to Example 8 (left) with the nanosponges according to Reference Example 4 (right), obtained from the same dextrin (β-cyclodextrin), with the same crosslinker (TDI) and with the same dextrin/crosslinker molar ratio (0.25).

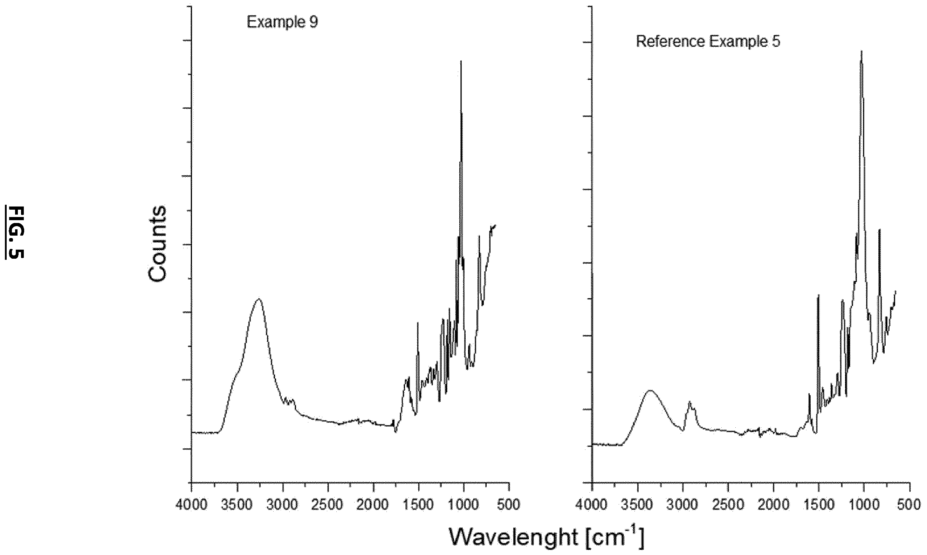

Figure 5 shows the comparison of the FTIR spectra of the nanosponge according to Example 9 (left) with the nanosponges according to Reference Example 5 (right), obtained from the same dextrin (β-cyclodextrin), with the same crosslinker (BADGE) and with the same dextrin/crosslinker molar ratio (0.25).

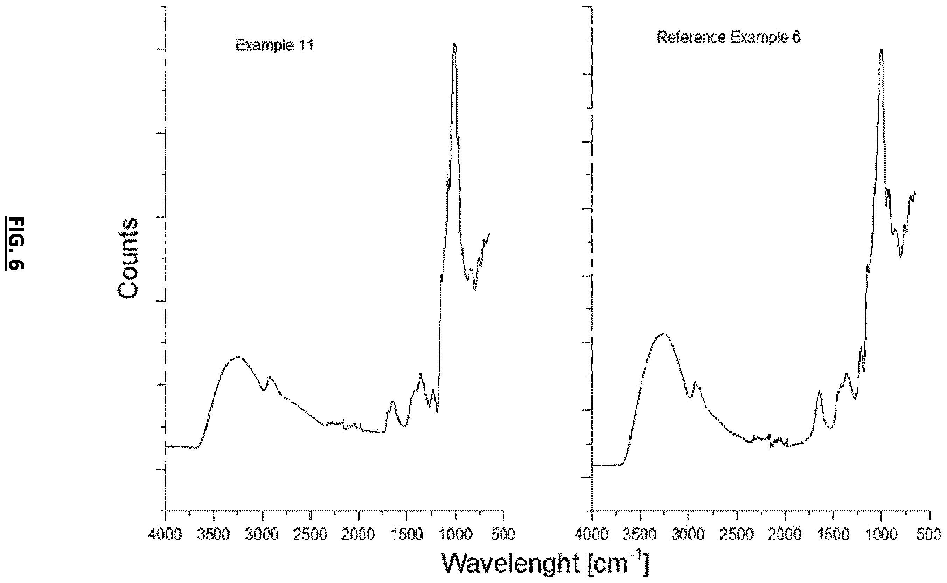

Figure 6 shows the comparison of the FTIR spectra of the nanosponge according to Example 11 (left) with the nanosponges according to Reference Example 6 (right), obtained from the same dextrin (Glucydex), with the same crosslinker (STMP) and with the same dextrin/crosslinker molar ratio (0.25).

The comparison of the FTIR spectra in Figures 1-6 shows that no differences were detectable between the nanosponges obtainable by means of the process according to the invention and the nanosponges obtained with prior art processes, confirming that the process according to the present invention allows obtaining nanosponges based on dextrins, without the need to have recourse to solvents.

## Example 17 - thermogravimetric analysis

Thermogravimetric analysis as disclosed above in the section "Materials and Methods" was carried out on the nanosponges according to Examples 1, 2, 3, and 11, and according to Reference Examples 1 and 6.

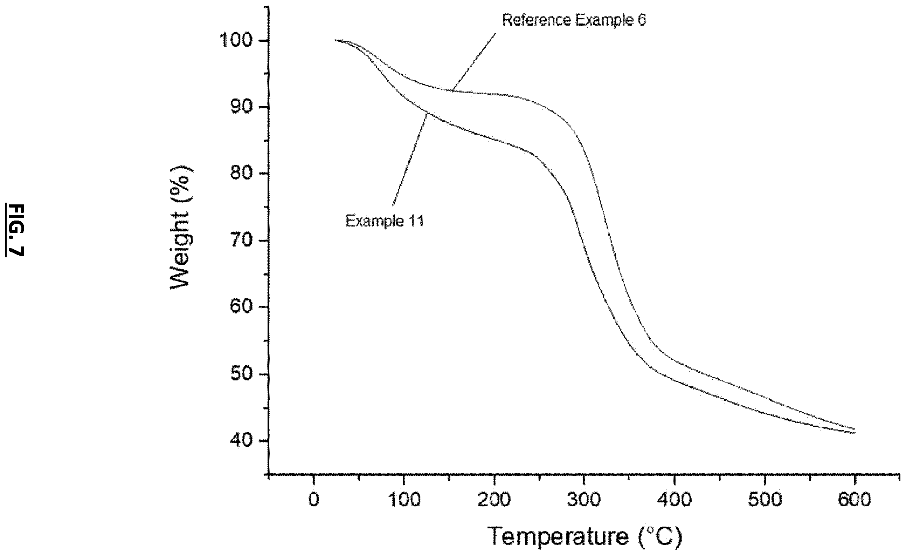

Figure 7 shows the comparison of the thermogravimetric analysis of the nanosponges according to Example 11 with the nanosponges according to Reference Example 6, obtained from the same dextrin (Glucydex), with the same crosslinker (STMP) and with the same dextrin/crosslinker molar ratio (0.25).
As it is apparent, the tested samples exhibited a similar degradation path, even if prepared with different methods.

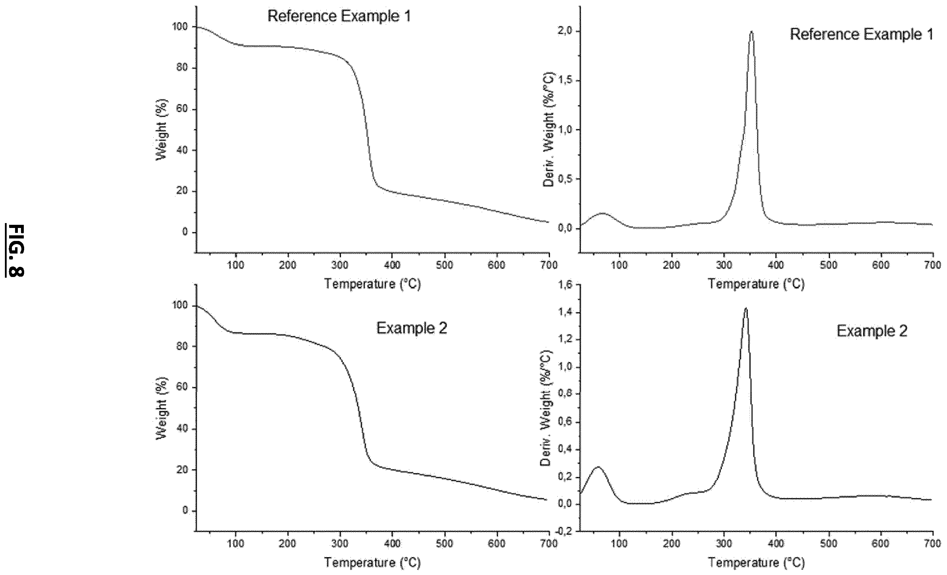

Figure 8 shows the comparison of the thermogravimetric analysis of the nanosponge according to Example 2 with the nanosponge according to Reference Example 1, obtained from the same dextrin (β-cyclodextrin), with the same crosslinker (CDI) and with the same dextrin/crosslinker molar ratio (0.25).
It is evident from the thermogravimetric mass loss curves (left side) and the corresponding derivate curves (right side) that both cross-linked polymers exhibited a very close degradation path and, consequently, the same molecular structure. The biggest mass loss started above 300°C and the relative maximum rate peak was located at around 345°C for both nanosponges. The initial mass loss present in both nanosponges was related to the adsorbed environmental water, always present with hygroscopic nanoparticles based on cyclodextrins.

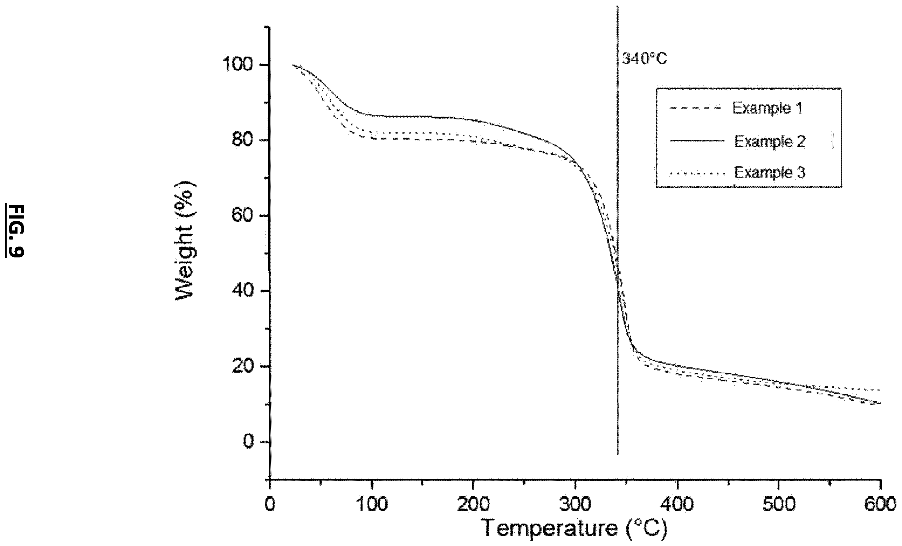

Figure 9, furthermore, shows the comparison of the thermogravimetric analysis of three nanosponges according to Examples 1, 2, and 3, respectively synthetized from α-cyclodextrin, β-cyclodextrin, and γ-cyclodextrin.
Also in this case, the degradation path appeared very similar, with an interesting difference in the initial water loss, related to the different water affinity of the different CDs, leading to a different hygroscopicity of the final material.

**Example 18** - **particle size**

Dynamic Light Scattering analysis as disclosed above in the section "Materials and Methods" was carried out on the nanosponges according to Examples 2, 4, and 5 (see Table 2).

Table 2

| Example | particle size (nm) |
|---------|--------------------|
| 2 | 800-900 |
| 4 | 800-900 |
| 5 | 800-900 |

**Example 19** $\zeta$-**potential**

The $\zeta$-potential of colloidal suspension of the nanosponges according to Examples 1-5, and 12-14 was determined as disclosed above in the section "Materials and Methods".

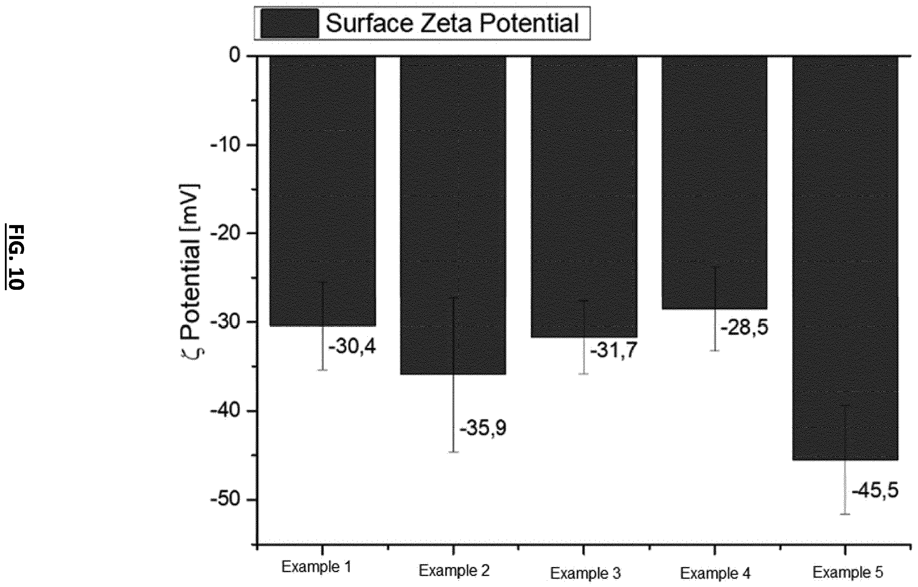

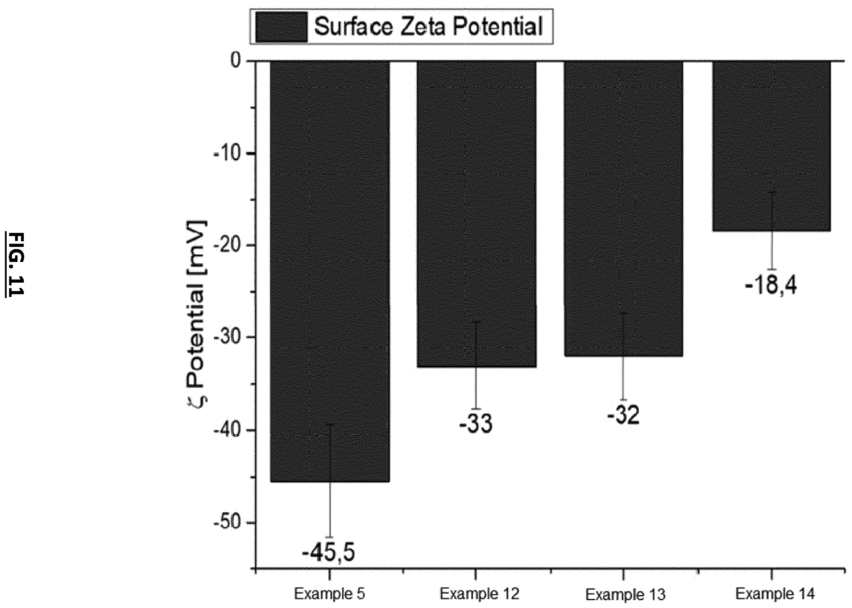

Figure 10 shows a plot with the comparison of the $\zeta$-potential of five nanosponges according to Examples 1, 2, 3, 4, and 5, whereas figure 11 shows a plot with the comparison of the $\zeta$-potential analysis of the nanosponges according to Examples 5, 12, 13, and 14.

As can be noticed, all the tested samples showed a highly negative $\zeta$-potential, which can so explain the stability of the solutions of the nanosponges obtained by the process according to the present invention.

Furthermore, the less negative $\zeta$-potential of the nanosponges according to 12, 13, and 14 confirmed the derivatization of the nanosponge according to Example 5 with the three dyes methyl red, rhodamine B, fluorescein, and thus the improved possibility of using the nanosponges according to the invention in the field of chemical sensors, in the pharmacologic area and image guided therapies, for example for preparing biological markers.

**Example 20 Elemental analysis**

Elemental analysis of the nanosponges according to Examples 1-5 was performed as disclosed above in the section "Materials and Methods".

All elemental analysis were performed with the intention of quantifying the still reactive imidazole (IM) moieties and the imidazole encapsulated within the nanosponge structure (IMH).

In an ideal reaction the carbonyl diimidazole completely reacts with one of hydroxyl of the dextrin, forming a carbonate bond between two different monomer and leaving two identical imidazoles, soluble in water and so removed after synthesis. In a real reaction, the CDI can however react asymmetrically, forming only a bond with a cyclodextrin and still maintaining one of the two reactive moieties. Since the nanosponges according to Examples 1-5 were synthetized in absence of solvents or other nitrogen-containing compounds, the presence of nitrogen in elemental analysis could only be related to the imidazole group.

For discerning between IMH (imidazole encapsulated within the nanosponge structure) and IM (reactive imidazole, still able to form bonds with, for example, nucleophilic groups of active molecules or dyes) the nanosponges according to Examples 1-5 were treated in two different ways.

The nanosponges according to Examples 2, 4 and 5 were washed with acetone and PSE, as disclosed above in the section "Materials and Methods". Acetone does not react, not hydrolyzing the bond between the nanosponge and the IM, and thanks to the high pressure (120 bar) of the PSE it was possible to remove the encapsulated IMH only.

The nanosponges according to Examples 1-5 were subjected also to a different treatment, longer, involving the maintenance of a small amount of material in water at 40°C for 8 hours, for a hydrolysis reaction. Every 2 hours part of the aliquot was withdrawn, washed in water for removing the IMH, freeze dried and subjected to elemental analysis to determine the nitrogen content.

The following tables 3 and 4 report the results respectively after the acetone PSE extraction, and the treatment with water at 40°C, above disclosed.

Table 3 - acetone PSE extraction

| Example | Nitrogen (weight %) |
|---------|---------------------|
| 2 | 1.19±0.07 |
| 4 | 0.79±0.02 |

(continued)

| Example | Nitrogen (weight %) |
|---|---|
| 5 | 3.28±0.09 |

Table 4 - 1-8 hours in water at 40°C

| Example | time (hours*) | Nitrogen (weight %) |
|---|---|---|
| 1 | 0 | 1.33±0.07 |
| | 2 | 0.53±0.02 |
| | 4 | 0.25±0.00 |
| | 8 | 0.20±0.01 |
| 2 | 0 | 2.69±0.12 |
| | 2 | 0.63±0.01 |
| | 4 | 0.31±0.01 |
| | 8 | 0.23±0.02 |
| 3 | 0 | 2.21±0.16 |
| | 2 | 0.61±0.02 |
| | 4 | 0.11±0.10 |
| | 8 | 0.00±0.00 |
| 4 | 0 | 6.39±0.05 |
| | 2 | 2.56±0.03 |
| | 4 | 1.31±0.03 |
| | 8 | 0.40±0.03 |
| 5 | 0 | 1.27±0.01 |
| | 2 | 0.77±0.01 |
| | 4 | 0.52±0.01 |
| | 8 | 0.17±0.01 |
| * hours from the beginning of the treatment | | |

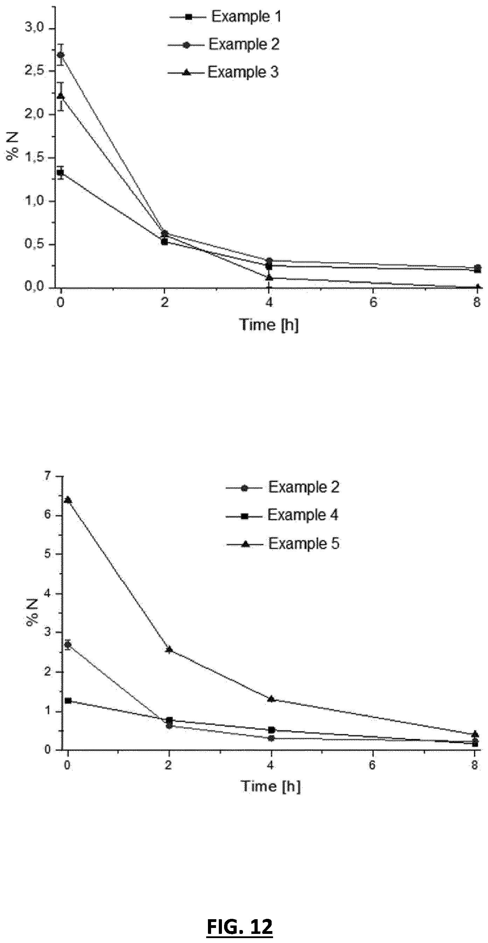

Figure 12 shows, in the upper part, the comparison of the nitrogen content in three nanosponges according to Examples 1, 2, and 3 and, in the lower part, the comparison of the nitrogen content in the nanosponges according to Examples 2, 4, and 5.

Results from elemental analysis were in agreement with what was conceivable by the reactions conditions and molar ratios: the nanosponge according to Example 5 exhibited the higher nitrogen content in %wt, around 6%, before any further steps of purification. Since the quantity of CDI involved was 2-4-fold higher if compared to the other nanosponges tested, the higher content was coherent: assuming the same kinetic and reactivity in all processes, the content of IMH and unreacted IM had to be higher, indeed. It was also noticed that that most of the CDI reacted in the cross-linking step, since after PSE extraction (Table 3) the amount of nitrogen dramatically decreased.

Furthermore, it was possible to say that after 8 hours of extraction with water, with all nanosponges, it was possible to eliminate almost completely both IMH and IM, using simply water.

**Example 21 not according to the invention (positively charged nanosponges with cyclodextrin)**

3.75 grams of β-cyclodextrin, 4.50 grams of BADGE, 300 milligrams of DABCO and 1 gram of Choline Chloride were inserted inside the 50 milliliters Ball Mill jar containing 16 milliliters (60 grams) of zirconia balls with 3mm of diameter.

After 1h of sun wheel rotation at 600 rpm, with clockwise to anticlockwise change of direction every 10 min, the obtained bulk was ground in mortar and the powder was ball milled again for 30 min with water. The dispersion was centrifuged and washed several times with deionized water and acetone, and dried at air. Mass balance was 36%. The presence of choline and positive charge was confirmed by elemental analysis and $\zeta$-potential: $\zeta$-potential was +19 mV and the amount of Nitrogen was of 1.50% wt.

**Example 22 not according to the invention (positively charged nanosponges with linecaps)**

Example 15 was repeated, but using 3.75 grams of KLEPTOSE® Linecaps Maltodextrin instead of 3.75 grams of $\beta$-cyclodextrin. A mass balance of 36 % was obtained . The presence of choline and positive charge was confirmed by elemental analysis and $\zeta$-potential: $\zeta$-potential was +12 mV and the amount of Nitrogen was of 1.50% wt.

**Example 23 (nanosponge based** on $\beta$-**cyclodextrin/citric acid with dextrin/crosslinker molar ratio of 0.25)**

In the twin-screw extruder, 5 grams of $\beta$-cyclodextrin, 3 grams of citric acid, and 0.510 grams of $NaPO_2H_2 \cdot H_2O$ were fed. The extruder was preheated and maintained at 150°C. The reaction occurred after 15 minutes. At the outlet of the extruder, the nanosponge was obtained in dry powder form.
The nanosponge thus obtained was subsequently milled for 30 min at 350 rpm, to obtain a particle size, measured by DLS, of about 800 nm.

**Example 24 (nanosponge based** on $\beta$-**cyclodextrin/citric acid with dextrin/crosslinker molar ratio of 0.125)**

Example 23 was repeated, but using 6 grams of citric acid instead of 3 grams, to get a dextrin/crosslinker molar ratio of 0.125.

**Example 25**

The $\zeta$-potential of colloidal suspension of the nanosponges according to Examples 23 and 24 and of reference examples 7 and 8 was determined as disclosed above in the section "Materials and Methods".
The following Table 5 reports the result obtained

Table 5 - $\zeta$-potential

| Example | $\zeta$-potential (mV) |
|---------|------------------------|
| 23 | -33.8 $\pm$ 4.29 |
| Ref. 7 | -21.8 $\pm$ 3.10 |
| 24 | -26.0 $\pm$ 6.85 |
| Ref. 8 | -29.4 $\pm$ 11.1 |

**Example 26** - **FT-IR analysis**

Nanosponges according to Examples 23 and 24 were characterized in terms of their FTIR spectrum and compared with the corresponding nanosponges according to Reference Examples 7 and 8.
The FTIR spectra were recorded as disclosed above in the section "Materials and Methods".

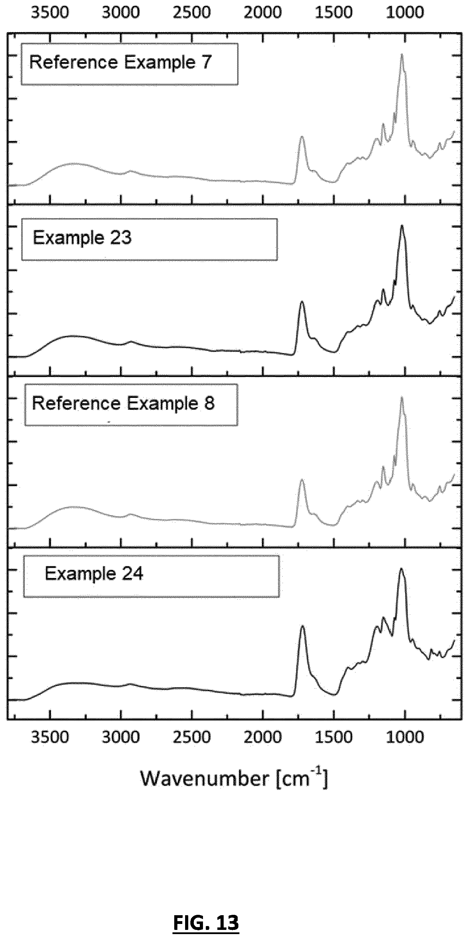

Figure 13 shows the comparison of the FTIR spectra of the nanosponges according to Examples 23 and 24 with the nanosponges according to Reference Examples 7 and 8, obtained from the same dextrin ($\beta$-cyclodextrin), with the same crosslinker (citric acid) and with the same dextrin/crosslinker molar ratios (0.25 and 0.125).
Figure 13 clearly shows that the spectra recorded from the same polymer but from different synthetic approach are nearly superimposable.

**Example 27** - **Adsorption of $Cu^{2+}$ ions and of Methylene Blue tests**

Nanosponges according to Examples 23 and 24 and according to Reference Example 7 and 8 were subjected to Adsorption of $Cu^{2+}$ ions and of Methylene Blue tests as disclosed above in the section "Materials and Methods". The tests were made in triplicate.
The following Table 6 reports the result obtained

Table 6 - adsorption tests

| Example | Cu$^{2+}$ ions Cu$^{2+}_{ads}$ / Cu$^{2+}_{tot}$ [%] | Methylene Blue (MB) MB$_{ads}$ / MB$_{tot}$ [%] |
|---------|------|------|
| 23 | 79.9 | 83.5 |
| Ref. 7 | 58.3 | 74.3 |
| 24 | 71.02 | 75.7 |
| Ref. 8 | 64.5 | 84.3 |

The capacity of the nanosponges according to the invention of adsorbing heavy metals from highly concentrated metal solutions (500 ppm) and of dyes was evaluated.

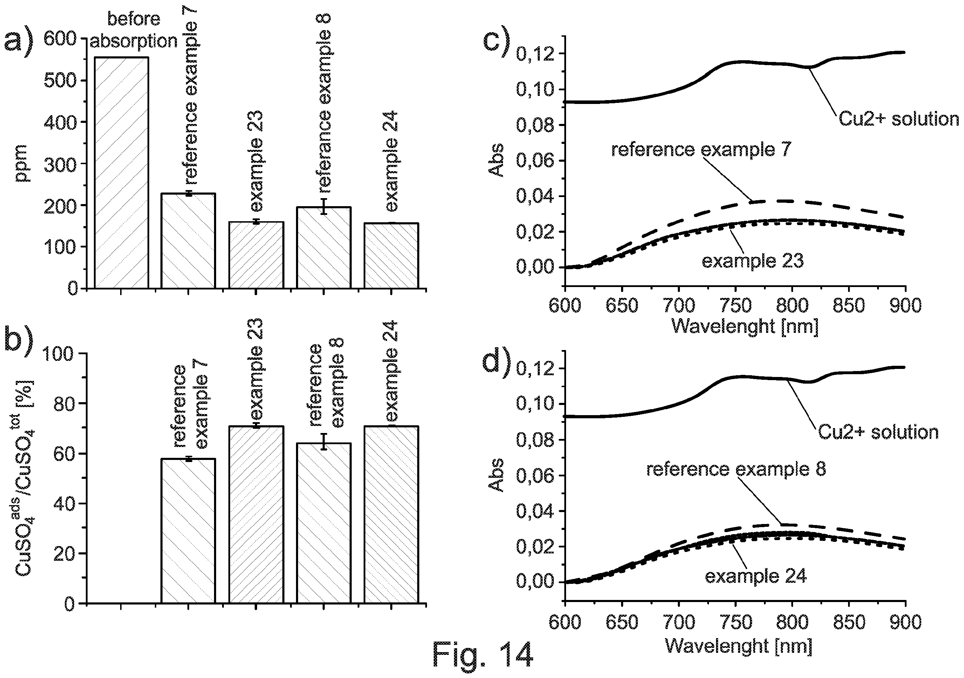

Figure 14 shows the amount of Cu$^{2+}$ ions in water before and after 24h as a percentage of the adsorbed amount. The nanosponge adsorption capacity is expressed as a percentage of the removed amount of metal (inset b) and ppm before/after absorption (inset a). UV spectra of the nanosponges according to Example 23 and Reference Example 7, with dextrin/crosslinked molar ratio 0.25 (inset c) and the nanosponges according to Example 24 and Reference Example 8, with dextrin/crosslinked molar ratio 0.125 (inset d) are reported.

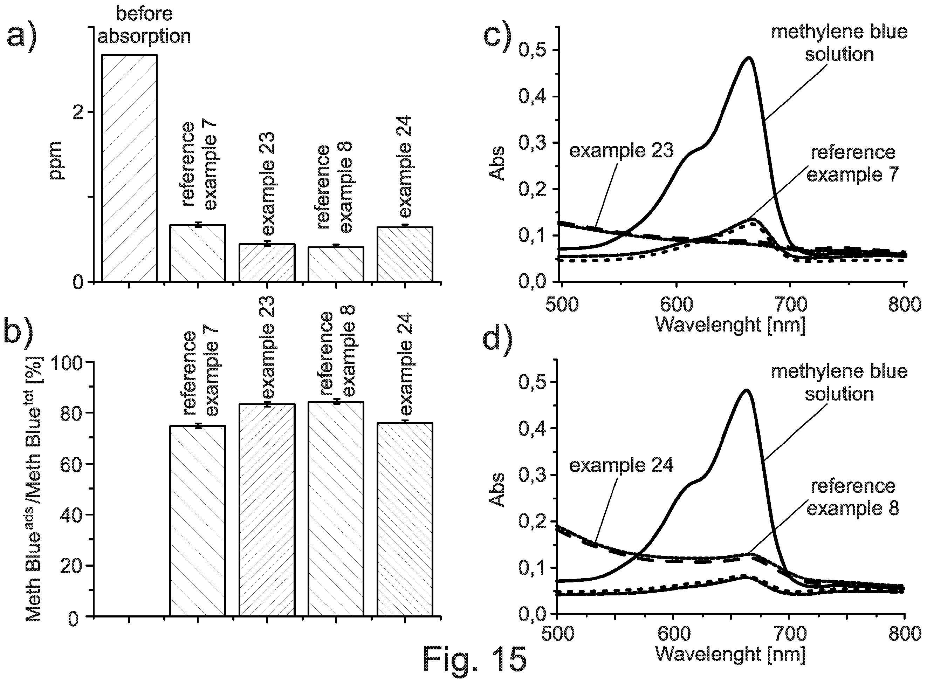

Figure 15 shows the amount of methylene blue in water before and after 24h as a percentage of the adsorbed amount. The nanosponge adsorption capacity is expressed as a percentage of the removed amount of methylene blue (inset b) and ppm before/after absorption (inset a). UV spectra of the nanosponges according to Example 23 and Reference Example 7, with dextrin/crosslinked molar ratio 0.25 (inset c) and the nanosponges according to Example 24 and Reference Example 8, with dextrin/crosslinked molar ratio 0.125 (inset d) are reported.

**Example 28 TGA**

Thermogravimetric analysis (TGA) as disclosed above in the section "Materials and Methods" was carried out on the nanosponges according to Examples 23 and 24, and according to Reference Examples 7and 8.

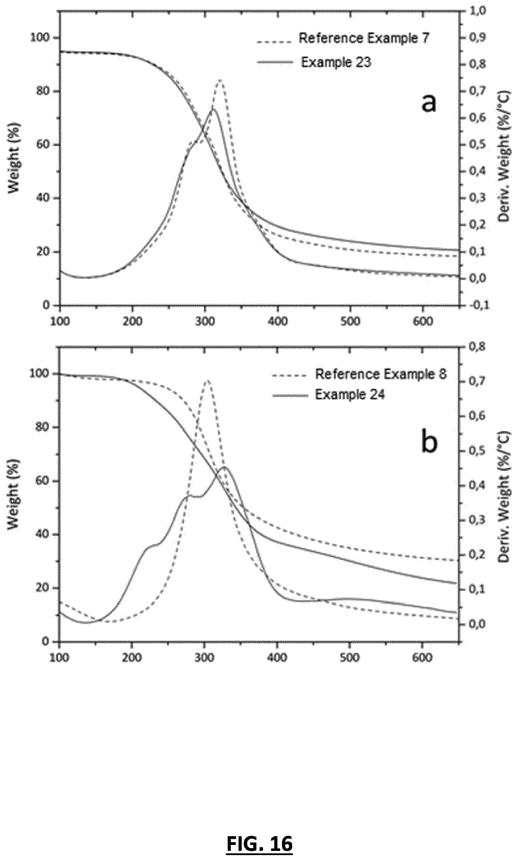

Figure 16 shows the comparison of the thermogravimetric analysis of the nanosponge according to Example 23 with the nanosponge according to Reference Example 7 (inset a), and of the nanosponges according to Example 24 with the nanosponges according to Reference Example 8 (inset b).

The comparison between the nanosponges according to Example 23 with the nanosponges according to Reference Example 7 showed two almost superimposable degradation path, and consequently the same molecular structure is expected.

More specifically, the degradation of the two crosslinked materials starts at about 200°C and occurred in one single step, leaving a carbonaceous residue, around 20 %/wt, which is thermally stable, decomposing at a very low rate at higher temperatures.

The comparison of curves between the nanosponge according to Example 24 and the nanosponge according to Reference Example 8, showed a similar situation, in which in addition a visible peak in the DTG at around 200-210°C was evidenced, related to a small weight loss that starts at about 150°C, due to the presence of citric acid molecules bonded to the nanosponge structure.

It was anyway evident that the degradation path of the nanosponge according to Example 24 and the nanosponge according to Reference Example 8 was very similar, especially for what concern the major loss of weight (related to the thermal degradation of the βNS-Citr structure).

**Example 29 - Swelling test**

The nanosponges according to Examples 23 and 24 were subjected to a swelling test as disclosed above in the section "Materials and Methods".

The following Tables 7 and 8 report the results obtained

Table 7 Swelling test results, dropwise method

|  | Absorption time | Swelling Ratio % |
|---|---|---|
| Example 23 | 3 h | 274,625 |
|  | 24 h | 299,001 |
|  | 4 days | 282,398 |
| Example 24 | 3 h | 253,171 |
|  | 24 h | 272,156 |
|  | 4 days | 262,386 |
| Reference Example 7 | 3 h | 288,554 |
|  | 24 h | 297,282 |
|  | 4 days | 263,043 |
| Reference Example 8 | 3 h | 245,719 |
|  | 24 h | 249,551 |
|  | 4 days | 222,211 |

Table 8 Swelling test results, centrifuge method

|  | Swelling Ratio % |
|---|---|
| Example 23 | 350,405 |
| Example 24 | 293,461 |
| Reference Example 7 | 296,931 |
| Reference Example 8 | 205,668 |

In general, high degrees of crosslinking normally lead to low swellable polymers, because of the more rigid structure. Dealing with water treatment applications, polymers that can adsorb but do not swell are more suitable than highly swellable polymers, because it is easier to recover the polymer after the adsorption (they can be easily and rapidly separated from the treated solutions by precipitation and filtration). Moderate volume variations allow also the use into filter devices. The synthesized nanosponges exhibited a low water uptake. All the synthesized nanosponges, with both methods, showed a maximum water uptake below 400 wt %, with maximum for samples with dextrin/crosslinker molar ratio 0.25.

It was noted that the method for preparing the nanosponges did not influence the final water uptake, and it was therefore possible to conclude that the nanosponges according to the invention resulted to be absolutely equivalent in terms of swelling properties to the nanosponges obtained through solvent-based synthesis.

**Example 30 not according to the invention (nanosponge based on $\beta$-cyclodextrin/terephtaloyl chloride with dextrin/crosslinker molar ratio of 0.25)**

In the 50 milliliters ball mill jar containing 10 zirconia balls (10 millimeters of diameter), 3.0 grams of $\beta$-cyclodextrin and 2.14 grams of terephthaloyl chloride were inserted, to get a dextrin/crosslinker molar ratio of 0.25. An excess of KOH, 0.300 g, was added in the reaction vessel.

After 1 hour of sun wheel rotation at 400 rotations per minute (rpm), with clockwise to anticlockwise change of direction every 15 min, the reaction was completed, and the external temperature was between 40-60°C. The finely ground powder thus obtained (0.70 grams) as then dispersed in water and washed several times with deionized water and acetone.

**Example 31 not according to the invention (nanosponge based on $\beta$-cyclodextrin/dimethyl phtalate with dextrin/crosslinker molar ratio of 0.25)**

In the 50 milliliters ball mill jar containing 10 zirconia balls (10 millimeters of diameter), 3.00 grams of $\alpha$-

cyclodextrin and 2.00 grams of dimethyl phtalate were inserted, to get a dextrin/crosslinker molar ratio of 0.25.

After 1 hour of sun wheel rotation at 400 rotations per minute (rpm), with clockwise to anticlockwise change of direction every 15 min, the reaction was completed, and the external temperature was between 40-60°C. The finely ground powder thus obtained (0.50 grams) as then dispersed in water and washed several times with deionized water and acetone.

**Example 32 - water solubility**

The nanosponges to according to Examples 30 and 31 were subjected to a solubility test with water, ethanol, acetone, dimethylformamide, dimethylsulfoxide, diethyl ether, petroleum ether, as disclosed above in the section "Materials and Methods".

Table 9 shows the result obtained.

In Table 1, "YES" and "NO" respectively means that the polymer was, or was not, soluble according to this definition given above.

## TABLE 9

| Example | Solvent | | | | | | |
|---|---|---|---|---|---|---|---|
| | water | ethanol | acetone | dimethyl formamide | dimethyl sulfoxide | diethyl ether | petroleum ether |
| **30** | NO | NO | NO | NO | NO | NO | NO |
| **31** | NO | NO | NO | NO | NO | NO | NO |

All the nanosponges tested were insoluble in the tested solvents, in accordance with the formation of a crosslinked network.

**Claims**

1. A process for preparing a nanosponge, comprising the steps of:

   a) extruding in a single- or a multi-screw extruder at least one dextrin and at least one crosslinker selected from the group consisting of: a dianhydride, a dicarboxylic acid or a derivative thereof, 1,1-carbonyldiimidazole, a carbonate ester, a diisocyanate, a diepoxide, and sodium trimetaphosphate; and
   b) obtaining the nanosponge from step a).

2. The process according to claim 1, wherein said extruder is a twin-screw extruder.

3. The process according to claim 1 or 2, wherein said extrusion is carried out at a temperature ranging from 120 °C to 180 °C.

4. The process according to any one of claims 1-3, wherein said extrusion is carried out for a time ranging from 5 minutes to 25 minutes.

5. The process according to any one of claims 1-4, wherein the at least one dextrin is a cyclodextrin.

6. The process according to claim 5, wherein the cyclodextrin is selected from the group consisting of: $\alpha$-cyclodextrin, $\beta$-cyclodextrin, $\gamma$-cyclodextrin, or a derivative thereof.

**7.** The process according to claim 6, wherein the at least one cyclodextrin is β-cyclodextrin.

**8.** The process according to any one of claims 1-7, wherein the at least one crosslinker is 1,1-carbonyldiimidazole.

**9.** The process according to claim 8, further comprising the step of: functionalizing the nanosponge of step b) with a functionalizing agent selected from the group consisting of: a dye and a fluorophore.

**10.** The process according to any one of claim 1-9, comprising the step of: adding in step a) at least one compound comprising at least one ammonium group.

**11.** The process according to claim 10, wherein the at least one compound comprising at least one ammonium group is choline chloride.

**Patentansprüche**

**1.** Verfahren zur Herstellung eines Nanoschwamms, umfassend die folgenden Schritte:

a) Extrudieren in einem Ein- oder Mehrschneckenextruder mindestens eines Dextrins und mindestens eines Vernetzungsmittels, ausgewählt aus der Gruppe bestehend aus: einem Dianhydrid, einer Dicarbonsäure oder einem Derivat davon, 1,1-Carbonyldiimidazol, einem Carbonatester, einem Diisocyanat, einem Diepoxid und Natriumtrimetaphosphat; und
b) Gewinnen des Nanoschwamms aus Schritt a).

**2.** Verfahren nach Anspruch 1, wobei der Extruder ein Doppelschneckenextruder ist.

**3.** Verfahren nach Anspruch 1 oder 2, wobei die Extrusion bei einer Temperatur im Bereich von 120 °C bis 180 °C durchgeführt wird.

**4.** Verfahren nach einem der Ansprüche 1 bis 3, wobei die Extrusion über einen Zeitraum von 5 Minuten bis 25 Minuten durchgeführt wird.

**5.** Verfahren nach einem der Ansprüche 1 bis 4, wobei das mindestens eine Dextrin ein Cyclodextrin ist.

**6.** Verfahren nach Anspruch 5, wobei das Cyclodextrin ausgewählt ist aus der Gruppe bestehend aus: α-Cydodextrin, β-Cyclodextrin, γ-Cyclodextrin oder einem Derivat davon.

**7.** Verfahren nach Anspruch 6, wobei das mindestens eine Cyclodextrin β-Cyclodextrin ist.

**8.** Verfahren nach einem der Ansprüche 1 bis 7, wobei das mindestens eine Vernetzungsmittel 1,1-Carbonyldiimidazol ist.

**9.** Verfahren nach Anspruch 8, ferner umfassend den folgenden Schritt: Funktionalisieren des Nanoschwamms aus Schritt b) mit einem Funktionalisierungsmittel, ausgewählt aus der Gruppe bestehend aus einem Farbstoff und einem Fluorophor.

**10.** Verfahren nach einem der Ansprüche 1 bis 9, umfassend den folgenden Schritt: Zugeben in Schritt a) von mindestens einer Verbindung, umfassend mindestens eine Ammoniumgruppe.

**11.** Verfahren nach Anspruch 10, wobei die mindestens eine Verbindung, umfassend mindestens eine Ammoniumgruppe, Cholinchlorid ist.

**Revendications**

**1.** Procédé de préparation d'une nanoéponge, comprenant les étapes de :

a) extruder dans une extrudeuse à une ou plusieurs vis au moins une dextrine et au moins un réticulant choisi dans le groupe constitué de : un dianhydride, un acide dicarboxylique ou un dérivé de celui-ci, le 1,1-carbonyldiimidazole, un ester de carbonate, un diisocyanate, un diépoxyde et le trimétaphosphate de sodium ; et

b) obtenir la nanoéponge de l'étape a).

2. Procédé selon la revendication 1, dans lequel ladite extrudeuse est une extrudeuse à double vis.

3. Procédé selon la revendication 1 ou 2, dans lequel ladite extrusion est réalisée à une température comprise entre 120 °C et 180 °C.

4. Procédé selon l'une quelconque des revendications 1 à 3, dans lequel ladite extrusion est effectuée pendant une durée comprise entre 5 et 25 minutes.

5. Procédé selon l'une quelconque des revendications 1 à 4, dans lequel l'au moins une dextrine est une cyclodextrine.

6. Procédé selon la revendication 5, dans lequel la cyclodextrine est choisie dans le groupe constitué de : $\alpha$-cyclodextrine, $\beta$-cyclodextrine, $\gamma$-cyclodextrine, ou un dérivé de celles-ci.

7. Procédé selon la revendication 6, dans lequel l'au moins une cyclodextrine est la $\beta$-cyclodextrine.

8. Procédé selon l'une quelconque des revendications 1 à 7, dans lequel l'au moins un réticulant est le 1,1-carbonyldiimidazole.

9. Procédé selon la revendication 8, comprenant en outre l'étape de : fonctionnaliser la nanoéponge de l'étape b) avec un agent de fonctionnalisation choisi dans le groupe constitué de : un colorant et un fluorophore.

10. Procédé selon l'une quelconque des revendications 1 à 9, comprenant l'étape de : ajouter à l'étape a) au moins un composé comprenant au moins un groupe ammonium.

11. Procédé selon la revendication 10, dans lequel l'au moins un composé comprends au moins un groupe ammonium est le chlorure de choline.

**FIG. 1**

**FIG. 2**

**FIG. 3**

**FIG. 4**

**FIG. 5**

24

**FIG. 6**

**FIG. 7**

**FIG. 8**

**FIG. 9**

**FIG. 10**

**FIG. 11**

**FIG. 12**

**FIG. 13**

Fig. 14

Fig. 15

EP 4 031 585 B1

**FIG. 16**

## REFERENCES CITED IN THE DESCRIPTION

### Patent documents cited in the description

- WO 2012147069 A

### Non-patent literature cited in the description

- **F. CALDERA ; M. TANNOUS ; R. CAVALLI ; M. ZANETTI ; F. TROTTA.** Evolution of Cyclodextrin Nanosponges. *Int. J. Pharm.,* 2017, 323-342
- **F. TROTTA.** Cyclodextrin Nanosponges and their Applications. *Cyclodextrins Pharm. Cosmet. Biomed. Curr. Futur. Ind. Appl.,* 2011
- **F. TROTTA ; M. ZANETTI ; R. CAVALLI.** Cyclodextrin-based nanosponges as drug carriers. *Beilstein J. Org. Chem.,* 2012, vol. 8, 2091-2099
- **F. TROTTA et al.** Molecularly imprinted cyclodextrin nanosponges for the controlled delivery of L-DOPA: perspectives for the treatment of Parkinson's disease. *Expert Opin. Drug Deliv.,* 2016, vol. 13 (12), 1671-1680
- **F. TROTTA ; C. DIANZANI ; F. CALDERA ; B. MOGNETTI ; R. CAVALLI.** *The application of nanosponges to cancer drug delivery,* 2014, 931-941
- **S. SWAMINATHAN ; R. CAVALLI ; F. TROTTA.** Cyclodextrin-based nanosponges: a versatile platform for cancer nanotherapeutics development. *Wiley Interdiscip. Rev. Nanomedicine Nanobiotechnology,* 2016, vol. 8 (4), 579-601
- **R. CAVALLI ; F. TROTTA ; W. TUMIATTI.** *J. Incl. Phenom. Macrocycl. Chem.,* 2006, vol. 56 (1-2), 209-213